# DEMANDE DE BREVET EUROPEEN

(11) **EP 4 335 669 A1**
(43) Date de publication de la demande: **13.03.2024**
(21) Numéro de dépôt: 23194669.0
(22) Date de dépôt: 31.08.2023
(51) Int. Cl.: B60G 15/06, F16C 19/10

(54) **BUTEE DE SUSPENSION ET JAMBE DE SUSPENSION**

(30) Priorité: 06.09.2022 FR 2208909
(71) Demandeur: NTN Europe, 74000 Annecy (FR)
(72) Inventeur: BONNAUDET, Aurélien, 74000 ANNECY (FR); PETERSCHMITT, Cyril, 74330 LA BALME DE SILLINGY (FR)
(74) Mandataire: Alatis

(57) **Abrégé**

Une jambe de suspension (10) comporte un amortisseur télescopique (12), un ressort hélicoïdal (14) et une butée de suspension (18). La rotation de la butée (18) est assurée par un palier (20) comportant au moins une rondelle supérieure (22) monobloc et une rondelle inférieure monobloc (24), la rondelle supérieure formant une portée annulaire plane d'appui (32) pour une tige de l'amortisseur télescopique (12). L'interface entre le ressort hélicoïdal (14) et le palier (20) est assurée par une coupelle monobloc (34) comportant un corps (35) formant une zone annulaire périphérique de logement (47) d'une extrémité supérieure du ressort hélicoïdal (14). La coupelle monobloc (34) comporte un revêtement anti-usure (56) ayant une épaisseur de moins de 3mm, et de préférence de moins de 2mm, surmoulé sur le corps (35) et recouvrant au moins partiellement la zone annulaire périphérique de logement (47) pour s'interposer entre le corps (35) de la coupelle monobloc (34) et l'extrémité supérieure du ressort hélicoïdal.

## Description

### DOMAINE TECHNIQUE DE L'INVENTION

L'invention se rapporte au domaine des suspensions de véhicules terrestres, notamment de véhicules automobiles, et vise une butée de suspension pour une jambe de suspension comportant un ressort hélicoïdal. L'invention se rapporte également à une jambe de suspension comportant une telle butée.

### ETAT DE LA TECHNIQUE ANTERIEURE

Dans le document EP3219521A1 est illustré une jambe de suspension comportant un ressort hélicoïdal, un amortisseur télescopique situé à l'intérieur du ressort hélicoïdal, et une butée de suspension comportant : un palier lisse ou à roulement et un coupelle monobloc destinée à être interposée entre le palier à roulement et le ressort hélicoïdal. Le palier comporte au moins une rondelle supérieure métallique et une rondelle inférieure métallique guidées en rotation l'une par rapport à l'autre autour d'un axe de référence de la butée de suspension, la rondelle supérieure formant une portée annulaire plane d'appui pour une tige de l'amortisseur télescopique. La coupelle monobloc comporte un corps en matière plastique ou composite présentant une face supérieure formant une zone de contact avec la rondelle inférieure et une face inférieure formant un épaulement annulaire plan extérieur et une portée annulaire au moins partiellement cylindrique tournée radialement vers l'extérieur et délimitant avec l'épaulement extérieur une zone annulaire périphérique de logement pour l'extrémité supérieure du ressort hélicoïdal. La coupelle monobloc, de préférence réalisée en matière moulable, notamment en matière plastique possiblement chargée, ou en un matériau composite avec ou sans insert métallique, constitue à elle seule l'interface entre la rondelle inférieure du roulement et le ressort hélicoïdal.

Cette butée de suspension s'avère particulièrement compacte en direction axiale, ce qui lui permet de répondre à des impératifs de compacité imposés par le constructeur du véhicule. À l'usage, on peut toutefois constater, dans certaines conditions d'essai de résistance à la corrosion, une casse du ressort, que l'on attribue à une usure du revêtement anti-corrosion du ressort à l'interface entre le ressort hélicoïdal et la zone annulaire périphérique de logement.

Pour une jambe de suspension de conception sensiblement moins compacte illustrée dans le document FR2964435A1, il est proposé d'interposer, entre le ressort hélicoïdal et la zone annulaire périphérique de logement, un anneau en matière élastomère destiné à filtrer les vibrations du ressort hélicoïdal. Un tel anneau a nécessairement une épaisseur importante pour réaliser sa fonction de filtrage, ce qui le rend incompatible avec une structure compacte.

Dans le document US2021010538 est divulgué un dispositif de palier de butée de suspension à utiliser avec un ressort de suspension dans une jambe de suspension automobile d'un véhicule, qui comprend un palier ayant un élément de palier annulaire supérieur et un élément de palier annulaire inférieur configurés pour une rotation relative. L'élément de palier annulaire inférieur comprend un corps annulaire et une rondelle d'amortissement surmoulée sur la face inférieure du corps annulaire. Cette rondelle d'amortissement a une surface d'appui inférieure configurée pour supporter axialement une spire d'extrémité du ressort de suspension, et présente une dureté de matériau de 50 à 85 Shore A et une épaisseur axiale de 2 à 10 mm.

### EXPOSE DE L'INVENTION

L'invention vise à remédier aux inconvénients de l'état de la technique et à proposer une butée de suspension et une jambe de suspension compactes et résistant mieux à la corrosion.

Pour ce faire est proposée suivant un premier aspect de l'invention une butée de suspension pour une jambe de suspension comportant un ressort hélicoïdal et un amortisseur télescopique. La butée de suspension comporte un palier comportant au moins une rondelle supérieure monobloc et une rondelle inférieure monobloc, guidées en rotation l'une par rapport à l'autre autour d'un axe de référence de la butée de suspension, la rondelle supérieure formant une portée annulaire plane d'appui pour une tige de l'amortisseur télescopique. La butée de suspension comporte en outre une coupelle monobloc comportant un corps présentant une face supérieure formant une zone de contact avec la rondelle inférieure et une face inférieure formant une zone annulaire périphérique de logement d'une extrémité supérieure du ressort hélicoïdal. Selon l'invention, la coupelle monobloc comporte un revêtement anti-usure ayant une épaisseur de moins de 2mm, surmoulé sur le corps de la coupelle monobloc et recouvrant au moins partiellement la zone annulaire périphérique de logement pour s'interposer entre le corps de la coupelle monobloc et l'extrémité supérieure du ressort hélicoïdal.

Le revêtement anti-usure a vocation à limiter l'usure de l'extrémité supérieure du ressort hélicoïdal, et ainsi à préserver le revêtement anti-corrosion du ressort hélicoïdal. Sa faible épaisseur ne lui permet pas de constituer une filtration efficace du ressort, mais le rend compatible avec un assemblage très compact. Sa dureté Shore A est de préférence supérieure à 85, par exemple supérieure ou égale à 90 Shore A.

Les rondelles sont de préférence métalliques.

Suivant un mode de réalisation, la zone annulaire périphérique de logement comporte un épaulement annulaire plan extérieur, et le cas échéant une portée annulaire, de préférence au moins partiellement cylindrique ou tronconique, tournée radialement vers l'extérieur, le revêtement recouvrant de préférence au moins l'épaulement annulaire plan extérieur. On couvre ainsi la zone de plus forte sollicitation du ressort.

De préférence, le revêtement est en polyuréthane thermoplastique. Le polyuréthane thermoplastique (TPU) est sélectionné ici pour ses excellentes propriétés mécaniques de résistance à l'abrasion et au déchirement. De préférence, le TPU pourra être un TPU polyester ou un TPU polyéther.

Suivant un mode de réalisation, le corps de la coupelle monobloc est en matière moulable, de préférence en matière plastique ou composite, chargée ou non de fibre, notamment de verre, et de préférence en PA6 GF60. Le cas échéant, la coupelle monobloc comporte un insert de renfort, de préférence métallique. De préférence, la coupelle monobloc est moulée, de préférence par injection. Le surmoulage du revêtement anti-usure peut être réalisé dans le moule d'injection du corps de la coupelle monobloc, par co-injection. De préférence, le moulage de la coupelle monobloc est effectué dans un moule à mouvement purement axial. En d'autres termes, les formes sont choisies de façon à éviter un moule à tiroirs latéraux, afin d'augmenter les cadences de fabrication et de limiter la complexité et les coûts.

Suivant un mode de réalisation, la rondelle inférieure présente un diamètre extérieur qui est inférieur à un diamètre intérieur de la zone annulaire périphérique de logement de l'extrémité supérieure du ressort hélicoïdal.

Suivant un mode de réalisation, la portée annulaire plane d'appui fait saillie radialement vers l'intérieur par rapport à la rondelle inférieure.

Suivant un mode de réalisation, le palier est un palier à roulement, comportant des corps roulants en contact avec des chemins de roulement formés sur les rondelles supérieure et inférieure. Alternativement, le palier peut être un palier lisse, avec ou sans interposition d'une rondelle de friction entre la rondelle supérieure et la rondelle inférieure.

Suivant un mode de réalisation, la rondelle supérieure est en appui direct ou indirect sur un bloc filtrant destiné à s'interposer entre la rondelle supérieure et un élément de caisse d'un véhicule automobile. Le bloc filtrant est destiné à la filtration des vibrations de la tige de l'amortisseur, ainsi qu'à la filtration des vibrations du ressort transmises par l'intermédiaire de la coupelle monobloc, et du palier.

On peut prévoir par ailleurs un couvercle en appui sur la rondelle supérieure, et venant le cas échéant s'interposer entre la rondelle supérieure et le bloc filtrant. Ce couvercle peut présenter une jupe périphérique formant avec un relief périphérique de la face supérieure de la coupelle monobloc un joint labyrinthe. Le couvercle peut avantageusement être encliqueté sur la coupelle monobloc, la jupe périphérique et le relief périphérique pouvant présenter à cet effet des zones d'encliquetage mutuel, ce qui permet de former un sous-ensemble cohérent entre le roulement et la coupelle, avant son montage sur le véhicule.

Suivant un autre aspect de l'invention, celle-ci a trait à une jambe de suspension comportant un ressort hélicoïdal, un amortisseur télescopique et une butée de suspension telle que décrite précédemment, le ressort hélicoïdal présentant une extrémité supérieure en appui logée dans la zone périphérique de logement en appui contre le revêtement anti-usure, l'amortisseur télescopique traversant la butée de suspension et étant en appui contre la portée annulaire plane d'appui formée par la rondelle supérieure.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension et d'une butée de suspension suivant un premier mode de réalisation de l'invention ;
- la figure 2, une vue en coupe d'une coupelle d'une butée de suspension suivant une variante de réalisation.

Pour plus de clarté, les éléments identiques sont repérés par des signes de référence identiques sur l'ensemble des figures.

### DESCRIPTION DÉTAILLÉE D'UN MODE DE REALISATION

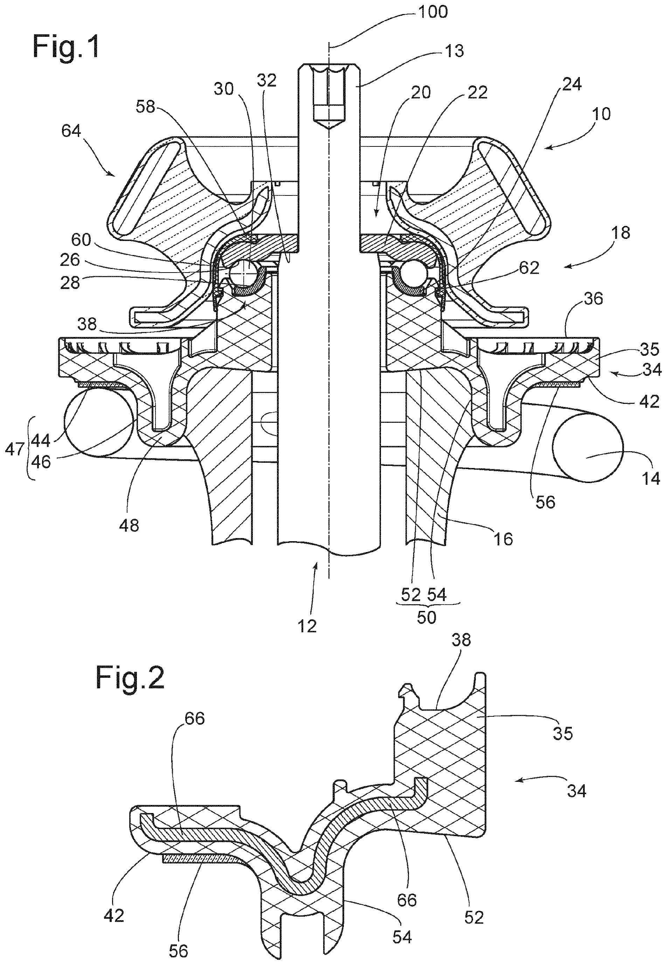

En référence à la figure 1, une jambe de suspension **10** est composée, dans sa partie supérieure, d'un amortisseur télescopique **12** dont seule la tête **13** a été illustrée, d'un ressort hélicoïdal **14,** le cas échéant d'un tampon de choc **16** et d'une butée de suspension tournante **18** assurant l'interface entre les éléments précédents et la caisse du véhicule (non représentée).

La rotation de la butée **18** autour d'un axe de référence **100** est assurée par un palier de guidage en rotation **20,** ici un roulement comportant une rondelle supérieure métallique **22** et une rondelle inférieure métallique **24,** de préférence réalisées par emboutissage d'une tôle, et définissant des chemins de roulement **26, 28** sur lesquels roulent des corps roulants **30,** en l'espèce des billes. La rondelle supérieure **22** forme une portée annulaire plane d'appui **32** pour la tige **13** de l'amortisseur télescopique **12,** s'étendant radialement vers l'intérieur par rapport aux chemins de roulement **26, 28.**

L'interface entre d'une part le roulement **20** et d'autre part l'amortisseur télescopique **12,** le ressort hélicoïdal **14** et le cas échéant le tampon de choc **16** est assurée par une coupelle d'appui monobloc **34,** dont le corps **35** est réalisé en matière moulable, de préférence en matière plastique chargée ou non, ou composite.

Le corps **35** présente sur sa face supérieure **36** une zone de contact **38** avec la rondelle inférieure **24** du roulement **20.** La face inférieure **42** de la coupelle **34** présente à sa périphérie un épaulement annulaire plan extérieur **44** et une portée annulaire au moins partiellement cylindrique **46** tournée radialement vers l'extérieur délimitant avec l'épaulement extérieur **44** une zone annulaire périphérique de logement **47** d'une extrémité supérieure du ressort hélicoïdal **14.**

Le corps **35** de la coupelle **34** présente de préférence une cloison formant un pli annulaire **48** formant la portée annulaire **46** et entourant extérieurement une zone de logement **50** d'une extrémité supérieure du tampon de choc formée par un épaulement annulaire plan **52** et par une face de confinement **54** au moins partiellement cylindrique tournée radialement vers l'intérieur. La face de confinement **54** de la zone de logement **50** de l'extrémité supérieure du tampon de choc **16** est située radialement à l'intérieur de la portée annulaire **46** de la zone périphérique de logement de l'extrémité supérieure du ressort **14.** La rondelle inférieure **24** a un diamètre inférieur au diamètre de la portée cylindrique **46** et de préférence inférieur au diamètre de la face de confinement **54.**

De façon remarquable, la coupelle **34** comporte en outre un revêtement anti-usure **56** en TPU ayant une épaisseur de moins de 3mm, et de préférence de moins de 2mm, surmoulé sur le corps **35** en matière plastique ou composite et recouvrant au moins partiellement la zone annulaire périphérique de logement **47** pour s'interposer entre le corps **35** de la coupelle monobloc **34** et l'extrémité supérieure du ressort hélicoïdal **14.** Le revêtement anti-usure **56** recouvre de préférence au moins l'épaulement annulaire plan extérieur **44** de la zone annulaire périphérique de logement **47.**

Un couvercle de protection **58** du roulement **20** vient en appui sur la rondelle supérieure **22** et présente une jupe périphérique **60** formant avec un relief périphérique ou des ergots **62** de la face supérieure **36** de la coupelle **34** un joint avec ou sans contact. La jupe périphérique **60** et le relief périphérique **62** présentent des zones d'encliquetage mutuel qui ne sont pas en prise après le montage de la butée sur le véhicule, mais permettent de constituer un sous-ensemble cohérent préassemblé entre le roulement **20** et la coupelle **34** avant le montage sur le véhicule.

L'isolation vibratoire et phonique entre la jambe de suspension **10** et la caisse du véhicule est assurée par un bloc filtrant **64** qui vient en appui contre le couvercle de protection **58,** ou le cas échéant directement sur la rondelle supérieure **22,** et qui reprend tous les efforts et toutes les vibrations passant par la rondelle supérieure **22,** qu'ils transitent par le ressort hélicoïdal **14** et la coupelle **34** ou par la tige **13** de l'amortisseur **12.**

La coupelle **34** illustrée sur la figure 2 se distingue de celle de la figure 1 par la présence d'un insert de renfort **66,** de préférence métallique surmoulé par le corps **35.**

Suivant un autre mode de réalisation non illustré, le palier **20** peut être un palier lisse, la rondelle supérieure **22** et la rondelle inférieure **24** présentant des pistes de friction annulaires au contact l'une de l'autre. On peut également envisager un palier lisse avec interposition d'une rondelle de friction entre la rondelle supérieure **22** et la rondelle inférieure **24.**

D'autres variantes sont naturellement possibles, notamment en combinant entre elles des caractéristiques des différents modes de réalisations.

## Revendications

1. Butée de suspension (18) pour une jambe de suspension (10) comportant un ressort hélicoïdal (14) et un amortisseur télescopique (12), la butée de suspension (18) comportant :
- un palier (20) comportant au moins une rondelle supérieure monobloc (22) et une rondelle inférieure monobloc (24) guidées en rotation l'une par rapport à l'autre autour d'un axe de référence (100) de la butée de suspension (18), la rondelle supérieure formant une portée annulaire plane d'appui (32) pour une tige de l'amortisseur télescopique (12) ; et
- une coupelle monobloc (34) comportant un corps (35) présentant une face supérieure (36) formant une zone de contact (38) avec la rondelle inférieure (24) et une face inférieure (42) formant une zone annulaire périphérique de logement (47) d'une extrémité supérieure du ressort hélicoïdal (14);
**caractérisée en ce que** la coupelle monobloc (34) comporte un revêtement anti-usure (56) ayant une épaisseur de moins de 2mm, surmoulé sur le corps (35) de la coupelle monobloc (34) et recouvrant au moins partiellement la zone annulaire périphérique de logement (47) pour s'interposer entre le corps (35) de la coupelle monobloc (34) et l'extrémité supérieure du ressort hélicoïdal.

2. Butée selon la revendication 1, **caractérisée en ce que** la zone annulaire périphérique de logement comporte un épaulement annulaire plan extérieur (44), et le cas échéant une portée annulaire (46) tournée radialement vers l'extérieur, le revêtement recouvrant de préférence au moins l'épaulement annulaire plan extérieur (44).

3. Butée selon l'une quelconque des revendications précédentes, **caractérisée en ce que** le revêtement est en polyuréthane thermoplastique.

4. Butée selon l'une quelconque des revendications précédentes, **caractérisée en ce que** le corps (35) de la coupelle monobloc (34) est en matière moulable, de préférence en matière plastique ou composite, chargée ou non de fibre, notamment de verre, et de préférence en PA6 GF60.

5. Butée selon l'une quelconque des revendications précédentes, **caractérisée en ce que** la coupelle monobloc (34) comporte un insert de renfort (66), de préférence métallique.

6. Butée selon l'une quelconque des revendications précédentes, **caractérisée en ce que** la rondelle inférieure (24) a un diamètre extérieur qui est inférieur à un diamètre intérieur de la zone annulaire périphérique de logement (47) de l'extrémité supérieure du ressort hélicoïdal (14).

7. Butée selon l'une quelconque des revendications précédentes, **caractérisée en ce que** la portée annulaire plane d'appui (32) fait saillie radialement vers l'intérieur par rapport à la rondelle inférieure (24).

8. Butée selon l'une quelconque des revendications précédentes, **caractérisée en ce que** le palier (20) est un palier à roulement, comportant des corps roulants (30) en contact avec des chemins de roulement (26, 28) formés sur les rondelles supérieure et inférieure (22, 24).

9. Butée selon l'une quelconque des revendications 1 à 7, **caractérisée en ce que** le palier (20) est un palier lisse, avec ou sans interposition d'une rondelle de friction entre la rondelle supérieure (22) et la rondelle inférieure (24).

10. Butée selon l'une quelconque des revendications précédentes, **caractérisée en ce que** la rondelle supérieure (22) est en appui direct ou indirect sur un bloc filtrant (64) destiné à s'interposer entre la rondelle supérieure (22) et un élément de caisse d'un véhicule automobile.

11. Butée selon l'une quelconque des revendications précédentes, **caractérisée en ce que** le revêtement anti-usure (56) a une dureté Shore A supérieure à 85, et de préférence supérieure ou égale à 90.

12. Jambe de suspension (10) comportant un ressort hélicoïdal (14) et un amortisseur télescopique (12), **caractérisée en ce qu'**elle comporte une butée de suspension (18) selon l'une quelconque des revendications précédentes, le ressort hélicoïdal (14) présentant une extrémité supérieure en appui logée dans la zone périphérique de logement (47) en appui contre le revêtement anti-usure (56), l'amortisseur télescopique (12) traversant la butée de suspension (18) et étant en appui contre la portée annulaire plane d'appui (32) formée par la rondelle supérieure (22).
